# EUROPÄISCHE PATENTSCHRIFT

(11) **EP 3 702 631 B1**
(45) Veröffentlichungstag und Bekanntmachung des Hinweises auf die Patenterteilung: **30.03.2022**
(21) Anmeldenummer: 20156273.3
(22) Anmeldetag: 10.02.2020
(51) Int. Cl.: F16C 29/08, F16C 29/02

(54) **LAGERBUCHSE**
BEARING BUSH
COUSSINET DE PALIER

(30) Priorität: 28.02.2019 DE 102019105112
(43) Veröffentlichungstag der Anmeldung: 02.09.2020
(73) Patentinhaber: Carl Freudenberg KG, 69469 Weinheim (DE)
(72) Erfinder: Schönberg, Frank, 68623 Lampertheim (DE); Hauer, Matthias, 69469 Weinheim (DE); Klingshirn, Christoph, 69214 Eppelheim (DE); Kokoszynski, Wojciech, 68159 Mannheim (DE); Gaa, Randolph, 68519 Viernheim (DE); Joyce, Stephen, Tyne & Wear, NE30 1LA (GB); Wiggers, Joram, Durham, DH2 3JR (GB); Morrison, Dean, Tyne & Wear, NE5 5JX (GB); Watling, Simon, Blyth, Northumberland, NE24 2PR (GB); Emig, Jürgen, 64689 Grasellenbach (DE)

(56) Entgegenhaltungen:
- WO-A1-2009/059762
- DE-A1- 1 400 967
- DE-A1- 3 412 562

## Beschreibung

Die Erfindung betrifft eine Lagerbuchse, umfassend zumindest ein Dichtelement und ein Lagerelement, wobei das Dichtelement mit zumindest einer Dichtlippe versehen ist, wobei das Lagerelement im Wesentlichen rohrförmig ausgebildet ist. Eine solche Lagerbuchse ist z.B. aus der DE 34 12 562 A1 bekannt.

Derartige Lagerbuchsen werden häufig zur Lagerung von Lenkstangen in Fahrzeugen verwendet. Das in die Lagerbuchse integrierte Dichtelement liegt dabei elastisch und mit radialer Vorspannung an der Lenkstange an und verhindert, dass Schmutz oder Feuchtigkeit in die Lagerbuchse eindringen kann.

Die Lagerbuchse muss dabei so ausgebildet sein, dass diese Querkräfte mit zu vernachlässigender Verformung und geringer Exzentrizität aufnehmen kann.

Bei der Montage der Lagerbuchse, beziehungsweise der Lenkstange, ist problematisch, dass Fertigungstoleranzen zu einer großen Schwankung der erforderlichen Montagekraft führen können. Dies gilt insbesondere dann, wenn wesentliche Bestandteile der Lagerbuchse aus Kunststoff ausgebildet sind.

Grundsätzlich ist es denkbar, die zu montierenden Bauteile durch Wärmezufuhr oder Wärmeabfuhr in den Abmessungen so zu verändern, dass eine Montage mit geringerer Kraft möglich ist. Dies erhöht jedoch den Aufwand der Montage. Alternativ ist es möglich, den Außenumfang des zu lagernden Maschinenelementes mit einer elastomeren Beschichtung zu versehen, welche aufgrund der Verformbarkeit Toleranzen kompensieren kann. Hierbei ist problematisch, dass sich durch die Verformung der Elastomerschicht aber bei einer aufzunehmenden Querlast eine erhöhte Exzentrizität ergibt.

Des Weiteren ist es denkbar, den Außendurchmesser des Lagers mit Rippen zu versehen. Bei dünnwandigen Lagerbuchsen geht dies aber mit einer großen Verformung der Bohrung der Lagerbuchse, also mit einem sich verändernden Innendurchmessers einher. Hieraus kann ein zu großes Spiel zwischen der Lagerbuchse und dem zu lagerndem Maschinenelement resultieren.

Der Erfindung liegt die Aufgabe zugrunde, eine Lagerbuchse bereitzustellen, welche bei einfacher Montierbarkeit während des Betriebs eine hohe Querbelastung kompensieren kann.

Diese Aufgabe wird mit den Merkmalen von Anspruch 1 gelöst. Auf vorteilhafte Ausgestaltungen nehmen die Unteransprüche Bezug.

Die erfindungsgemäße Lagerbuchse umfasst zumindest ein Dichtelement und ein Lagerelement, wobei das Dichtelement mit zumindest einer Dichtlippe versehen ist, wobei das Lagerelement im Wesentlichen rohrförmig ausgebildet ist, wobei das Lagerelement außenumfangsseitig mehrere in Axialrichtung verlaufende Erhebungen aufweist, wobei der Innendurchmesser des Lagerelementes in den den Erhebungen zugeordneten Abschnitten größer ist als in den übrigen Abschnitten.

Durch die erfindungsgemäße Ausgestaltung kann sich die Lagerbuchse während der Montage in eine Aufnahmebohrung verformen, wodurch die Montagekräfte sinken. Dadurch, dass der Innendurchmesser des Lagerelementes in den den Erhebungen zugeordneten Abschnitten größer ist als in den übrigen Abschnitten, wird die Verformung des Lagerelementes derart kompensiert, dass ein in dem Lagerelement zu lagerndes Maschinenelement mit einem geringen Lagerspiel gelagert werden kann und sich im Lastfall keine unzulässig hohe Exzentrizität ergibt.

Das Lagerelement ist dabei vorzugsweise so ausgebildet, dass dieses dünnwandig ist. Dünnwandig ist ein Lagerelement im Sinne der Erfindung, wenn die Wandstärke des Lagerelementes acht- bis zwölfmal kleiner ist als der Außendurchmesser des Lagerelementes. Beispielsweise beträgt bei einem Außendurchmesser des Lagerelementes von 25 mm der Innendurchmesser des Lagerelementes, also der Durchmesser der Bohrung des Lagerelementes, 20 mm. Bei einem derartigen Lagerelement ergibt sich eine Wandstärke von 2,5 mm, wenn die Wandstärke des Lagerelementes zehnmal kleiner ist als dessen Außendurchmesser. Wird ein derartiges Lagerelement in eine Aufnahmebohrung eingepresst, so verformt sich das Lagerelement derart, dass sich nach der Montage ein Innendurchmesser mit einer nur sehr geringen Exzentrizität ergibt, so dass anschließend ein Maschinenelement, beispielsweise eine Lenkstange mit geringem Lagerspiel aufgenommen werden kann.

Vorzugsweise ändert sich der Innendurchmesser des Lagerelementes über den Umfang betrachtet stetig. Gemäß einer vorteilhaften Ausgestaltung verändert sich der Innendurchmesser des Lagerelementes in Umfangsrichtung betrachtet sinusförmig. Hierbei ist vorteilhaft, dass sich eine besonders gute Lastverteilung während der Montage der Lagerbuchse ergibt, was wiederum mit einer besonders geringen Exzentrizität des Innendurchmessers des Lagerelementes einhergeht.

Das Lagerelement kann vier bis zwölf Erhebungen aufweisen. Die Anzahl der Erhebungen hängt dabei insbesondere von dem Außendurchmesser des Lagerelementes ab, wobei das Lagerelement vorzugsweise je mehr Erhebungen aufweist, desto größer der Außendurchmesser ist. Für die Verwendung der Lagerbuchse als Lagerbuchse für eine Lagerung einer Lenkstange ist es besonders vorteilhaft, wenn das Lagerelement sechs bis zehn Erhebungen aufweist.

Die Höhe der Erhebungen beträgt vorzugsweise jeweils zwischen 0,9% und 1,5% des Außendurchmessers des Lagerelementes. Bei einem Außendurchmesser des Lagerelementes von 25 mm beträgt dementsprechend die Höhe einer Erhebung zwischen 0,225 mm und 0,375 mm. Es hat sich gezeigt, dass ein derartig ausgestaltetes Lagerelement bei den zu erwartenden Toleranzen mit einer geringen Montagekraft montierbar ist und dabei lediglich eine sehr geringe Exzentrizität hinsichtlich des Innendurchmessers aufweist.

Die Erhebungen erstrecken sich dabei vorzugsweise jeweils über 4% bis 10% des Umfangs des Lagerelementes. Bei einem Außendurchmesser des Lagerelementes von 25 mm erstrecken sich die Erhebungen dabei dementsprechend jeweils über 1 mm bis 2,5 mm des Umfangs des Lagerelementes.

Die Erhebungen sind vorzugsweise in Form von Rippen ausgebildet. Ein derartig ausgestaltetes Lagerelement ist besonders einfach herstellbar.

Der Innendurchmesser der Lagerbuchse kann sich ausgehend von einem mittleren Innendurchmesser über den Umfang betrachtet um bis zu 0,2% vergrößern beziehungsweise verringern. Bei einem Innendurchmesser von 20 mm verändert sich der Innendurchmesser dementsprechend um 0,04 mm. Bei einem sinusförmigen Verlauf der Änderung des Innendurchmessers bewegt sich der Innendurchmesser dementsprechend zwischen 19,96 mm und 20,04 mm. Der mittlere Innendurchmesser beträgt 20 mm.

Das Lagerelement ist vorzugsweise aus Kunststoff ausgebildet. Insbesondere bei der Verwendung der Lagerbuchse als Lagerbuchse für eine Lenkstange ist aufgrund der zu erwartenden Lagerkräfte Kunststoff der bevorzugte Werkstoff. Hierbei ist insbesondere vorteilhaft, dass eine Lagerung schmiermittelfrei erfolgen kann. Des Weiteren sind Lagerbuchsen aus Kunststoff kostengünstig herstellbar. Vorteilhafte Kunststoffe sind dabei Polyamid (PA), insbesondere Polyamid 6.6, Polybutylenterephthalat (PBT) oder Polytetrafluorethylen (PTFE). Ebenso ist die Verwendung von faserverstärkten Kunststoffen denkbar.

Um zu verhindern, dass Schmutz oder Feuchtigkeit in das Lagerelement eindringt, ist die Lagerbuchse mit einem Dichtelement versehen. Das Dichtelement weist eine Dichtlippe auf, welche nach Montage unter radialer Vorspannung dichtend an dem zu lagernden Maschinenelement anliegt. Gemäß einer vorteilhaften Ausgestaltung umfasst das Dichtelement zwei mit axialem Abstand zueinander angeordnete Dichtlippen, welche jeweils nach Montage mit radialer Vorspannung an dem zu lagernden Maschinenelement anliegen. Durch die doppelte Dichtlippe ergibt sich eine besonders gute Dichtwirkung.

Das Dichtelement ist vorzugsweise aus einem elastomeren Werkstoff ausgebildet, beispielsweise aus Acrylnitril-Butadien-Kautschuk (NBR). Je nach Anwendung ist ferner denkbar, das Dichtelement aus Ethylen-Propylen-Dien-Monomer (EPDM) auszubilden. Weitere denkbare Werkstoffe sind thermoplastische Elastomere.

Das Dichtelement ist formschlüssig mit dem Lagerelement verbunden. Dadurch ist es möglich, das Dichtelement und das Lagerelement aus voneinander abweichenden Werkstoffen unabhängig voneinander herzustellen und anschließend zu montieren.

Dazu kann das Lagerelement an einer Stirnseite im Bereich des Außenumfangs eine Vertiefung aufweisen, wobei der Stirnseite eine Querschnittserweiterung zugeordnet ist. Durch die Querschnittserweiterung kann ein kongruent ausgeformtes Dichtelement verliersicher in der Vertiefung befestigt werden. Zur Verbesserung der Verliersicherheit kann in das Dichtelement ein Federelement, beispielsweise eine Ringwendelfeder, angeordnet sein, welche das Dichtelement an das Lagerelement andrückt.

Einige der Ausgestaltungen der erfindungsgemäßen Lagerbuchse werden nachfolgend anhand der Figuren näher erläutert. Diese zeigen, jeweils schematisch:
- Fig. 1: eine Lagerbuchse im Halbschnitt;
- Fig. 2: im Detail das Lagerelement der Lagerbuchse im Halbschnitt;
- Fig. 3: im Detail das Lagerelement in der Draufsicht;
- Fig. 4: im Detail das Dichtelement der Lagerbuchse im Halbschnitt.

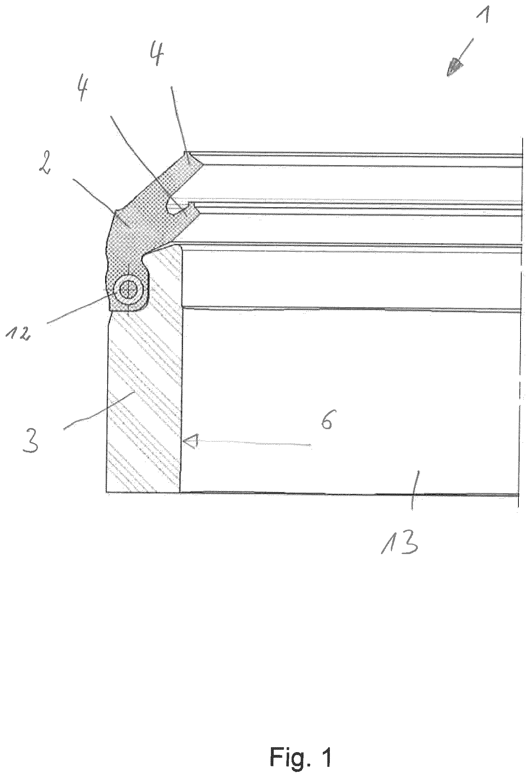

Figur 1 zeigt eine Lagerbuchse 1 mit einem Dichtelement 2 und einem Lagerelement 3. Das Dichtelement 2 ist mit zwei parallelen und mit axialem Abstand zueinander angeordneten Dichtlippen 4 versehen, welche axial von der Lagerbuchse 1 abragen und sich radial nach innen erstrecken.

Das Lagerelement 3 ist rohrförmig ausgebildet und mit einer Bohrung 13 zur Aufnahme eines zu lagernden Maschinenelementes versehen.

Bei der vorliegenden Ausgestaltung ist das Dichtelement 2 aus NBR ausgebildet und das Lagerelement 3 aus Polyamid 6.6. Sowohl das Dichtelement 2 als auch das Lagerelement 3 sind Spritzgussteile.

Bei der vorliegenden Ausgestaltung dient die Lagerbuchse 1 der Lagerung einer Lenkstange eines Kraftfahrzeuges. Gemäß einer alternativen Ausgestaltung dient die Lagerbuchse 1 der Lagerung von Elementen von Federgabeln von Zweirädern.

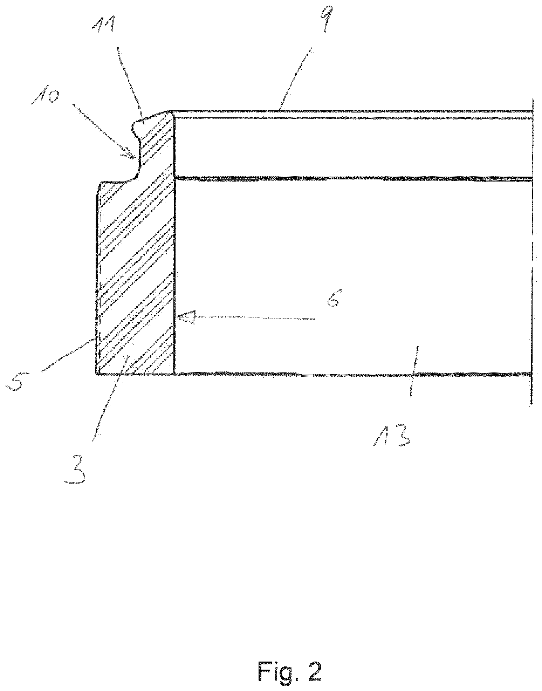

Figur 2 zeigt im Detail das Lagerelement 3 gemäß Figur 1. Das Lagerelement 3 weist außenumfangsseitig mehrere in Axialrichtung verlaufende Erhebungen 5 auf. Des Weiteren ist der Innendurchmesser 6 des Lagerelementes 3 in den den Erhebungen 5 zugeordneten Abschnitten größer als in den übrigen Abschnitten.

Das Lagerelement 3 weist an einer Stirnseite 9 eine umlaufende Vertiefung 10 auf, an welche sich in Richtung der Stirnseite 9 eine Querschnittserweiterung 11 anschließt. Die Vertiefung 10 nimmt das Dichtelement 2 auf, wobei das Dichtelement 2 durch die Querschnittserweiterung 11 formschlüssig auf dem Lagerelement 3 fixiert ist.

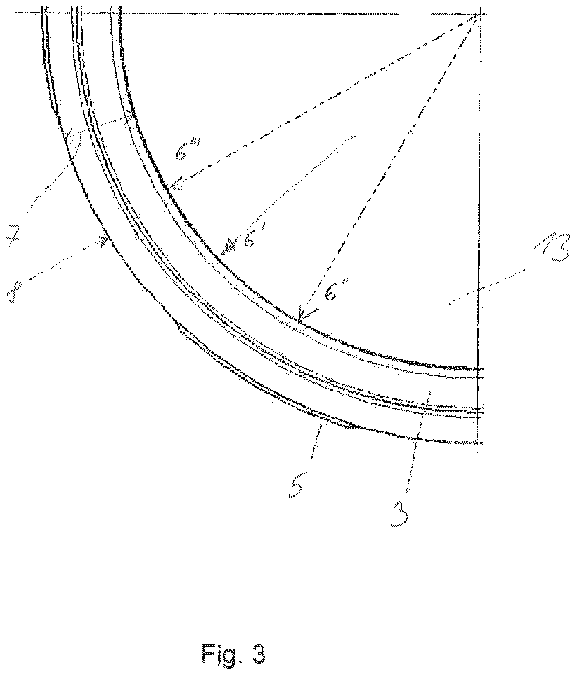

Figur 3 zeigt das Lagerelement 3 in der Draufsicht. In der vorliegenden Ausgestaltung weist das Lagerelement 3 außenumfangsseitig sechs Erhebungen 5 auf. Die Höhe der Erhebung 5 beträgt dabei jeweils 1,2% des Außendurchmessers 8 des Lagerelementes 3. Ferner erstrecken sich die Erhebungen 5 über 8% des Umfangs des Lagerelementes 3.

Figur 3 kann ferner entnommen werden, dass sich der Innendurchmesser 6 des Lagerelementes 3 über den Umfang betrachtet stetig ändert. Bei der vorliegenden Ausgestaltung ändert sich der Innendurchmesser 6 des Lagerelementes 3 in Umfangsrichtung betrachtet sinusförmig.

Der Innendurchmesser 6 der Lagerbuchse 3 verringert beziehungsweise vergrößert sich ausgehend von einem mittleren Innendurchmesser 6' über den Umfang betrachtet um 0,1%. Daraus resultiert ein größter Innendurchmesser 6", welcher den Erhebungen 5 zugeordnet ist und welcher 0,2% größer ist als der mittlere Durchmesser 6'. Zwischen den Erhebungen 5 ergibt sich ein kleinster Innendurchmesser 6‴, welcher 0,2% kleiner ist als der mittlere Innendurchmesser 6'.

Die Wandstärke 7 des Lagerelementes 3 beträgt 18% des Außendurchmessers 8 des Lagerelementes 3.

Die Erhebungen 5 sind in Form von Rippen ausgebildet.

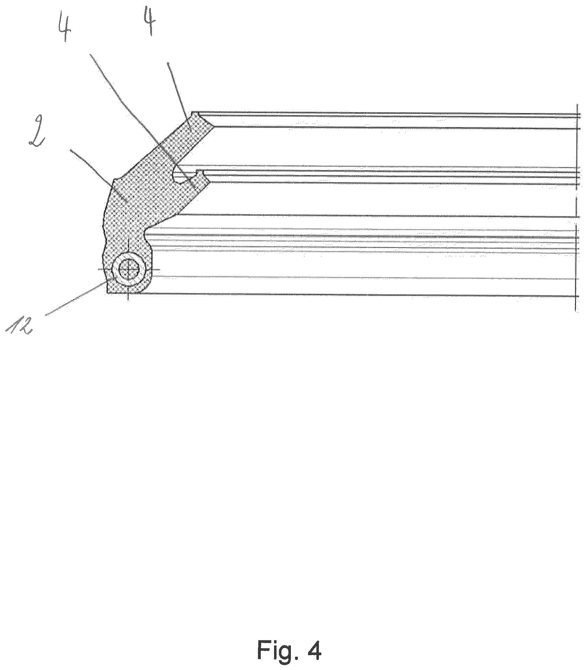

Figur 4 zeigt im Detail das Dichtelement 2. In dem der Vertiefung 10 zugeordneten Abschnitt des Dichtelementes 2 weist das Dichtelement 2 ein integriertes Federelement 12 in Form einer Ringwendelfeder auf. Das Federelement 12 bewirkt eine radiale Anpressung des Dichtelementes 2 in die Vertiefung 10.

## Patentansprüche

1. Lagerbuchse (1), umfassend zumindest ein Dichtelement (2) und ein Lagerelement (3), wobei das Dichtelement (2) mit zumindest einer Dichtlippe (4) versehen ist, wobei das Lagerelement (3) im Wesentlichen rohrförmig ausgebildet ist, wobei das Dichtelement (2) formschlüssig mit dem Lagerelement (3) verbunden ist, **dadurch gekennzeichnet, dass** das Lagerelement (3) außenumfangsseitig mehrere in Axialrichtung verlaufende Erhebungen (5) aufweist, wobei der Innendurchmesser (6) des Lagerelementes (3) in den den Erhebungen (5) zugeordneten Abschnitten größer ist als in den übrigen Abschnitten.

2. Lagerbuchse nach Anspruch 1, **dadurch gekennzeichnet, dass** die Wandstärke (7) des Lagerelementes (3) acht- bis zwölfmal kleiner ist als der Außendurchmessers (8) des Lagerelementes (3).

3. Lagerbuchse nach Anspruch 1 oder 2, **dadurch gekennzeichnet, dass** sich der Innendurchmesser (6) des Lagerelementes (3) über den Umfang betrachtet stetig ändert.

4. Lagerbuchse nach einem der Ansprüche 1 bis 3, **dadurch gekennzeichnet, dass** sich der Innendurchmesser (6) des Lagerelementes (3) in Umfangsrichtung betrachtet sinusförmig verändert.

5. Lagerbuchse nach einem der Ansprüche 1 bis 4, **dadurch gekennzeichnet, dass** das Lagerelement (3) vier bis zwölf Erhebungen (5) aufweist.

6. Lagerbuchse nach einem der Ansprüche 1 bis 5, **dadurch gekennzeichnet, dass** die Höhe der Erhebungen (5) jeweils zwischen 0,9% und 1,5% des Außendurchmessers (8) des Lagerelementes (3) entspricht.

7. Lagerbuchse nach einem der Ansprüche 1 bis 6, **dadurch gekennzeichnet, dass** sich die Erhebungen (5) jeweils über 4% bis 10% des Umfangs des Lagerelementes (3) erstrecken.

8. Lagerbuchse nach einem der Ansprüche 1 bis 7, **dadurch gekennzeichnet, dass** die Erhebungen (5) in Form von Rippen ausgebildet sind.

9. Lagerbuchse nach einem der Ansprüche 1 bis 8, **dadurch gekennzeichnet, dass** sich der Innendurchmesser (6) der Lagerbuchse (3) ausgehend von einem mittleren Innendurchmesser (6') über den Umfang betrachtet um bis zu 0,2% vergrößert beziehungsweise verringert.

10. Lagerbuchse nach einem der Ansprüche 1 bis 9, **dadurch gekennzeichnet, dass** das Lagerelement (3) aus Kunststoff ausgebildet ist.

## Claims

1. Bearing bush (1) comprising at least one sealing element (2) and a bearing element (3), wherein the sealing element (2) is provided with at least one sealing lip (4), wherein the bearing element (3) is of substantially tubular configuration, wherein the sealing element (2) is connected to the bearing element (3) in a form-fitting manner, **characterized in that** the bearing element (3) has, on its outer circumference, a plurality of elevations (5) which run in an axial direction, wherein the inner diameter (6) of the bearing element (3) is greater in the portions assigned to the elevations (5) than in the remaining portions.

2. Bearing bush according to Claim 1, **characterized in that** the wall thickness (7) of the bearing element (3) is eight to twelve times smaller than the outer diameter (8) of the bearing element (3).

3. Bearing bush according to Claim 1 or 2, **characterized in that** the inner diameter (6) of the bearing element (3), as viewed over the circumference, changes in a steady manner.

4. Bearing bush according to one of Claims 1 to 3, **characterized in that** the inner diameter (6) of the bearing element (3), as viewed in a circumferential direction, changes in a sinusoidal manner.

5. Bearing bush according to one of Claims 1 to 4, **characterized in that** the bearing element (3) has four to twelve elevations (5).

6. Bearing bush according to one of Claims 1 to 5, **characterized in that** the height of the elevations (5) corresponds in each case to between 0.9% and 1.5% of the outer diameter (8) of the bearing element (3).

7. Bearing bush according to one of Claims 1 to 6, **characterized in that** the elevations (5) each extend over 4% to 10% of the circumference of the bearing element (3) .

8. Bearing bush according to one of Claims 1 to 7, **characterized in that** the elevations (5) are configured in the form of ribs.

9. Bearing bush according to one of Claims 1 to 8, **characterized in that** the inner diameter (6) of the bearing bush (3), proceeding from a middle inner diameter (6'), as viewed over the circumference, increases or decreases by up to 0.2%.

10. Bearing bush according to one of Claims 1 to 9, **characterized in that** the bearing element (3) is formed from plastic.

## Revendications

1. Coussinet de palier (1), comprenant au moins un élément d'étanchéité (2) et un élément de palier (3), l'élément d'étanchéité (2) étant pourvu d'au moins une lèvre d'étanchéité (4), l'élément de palier (3) étant réalisé de manière substantiellement tubulaire, l'élément d'étanchéité (2) étant relié à l'élément de palier (3) par complémentarité de forme,
**caractérisé en ce que** l'élément de palier (3) présente côté circonférence extérieure plusieurs bossages (5) s'étendant dans la direction axiale, le diamètre intérieur (6) de l'élément de palier (3) étant plus grand dans les parties associées aux bossages (5) que dans les autres parties.

2. Coussinet de palier selon la revendication 1, **caractérisé en ce que** l'épaisseur de paroi (7) de l'élément de palier (3) est de huit à douze fois inférieure au diamètre extérieur (8) de l'élément de palier (3).

3. Coussinet de palier selon la revendication 1 ou 2, **caractérisé en ce que** le diamètre intérieur (6) de l'élément de palier (3) varie en continu, vu sur la circonférence.

4. Coussinet de palier selon l'une quelconque des revendications 1 à 3, **caractérisé en ce que** le diamètre intérieur (6) de l'élément de palier (3) varie de manière sinusoïdale, vu dans la direction circonférentielle.

5. Coussinet de palier selon l'une quelconque des revendications 1 à 4, **caractérisé en ce que** l'élément de palier (3) présente de quatre à douze bossages (5).

6. Coussinet de palier selon l'une quelconque des revendications 1 à 5, **caractérisé en ce que** la hauteur des bossages (5) correspond respectivement à une valeur entre 0,9 % et 1,5 % du diamètre extérieur (8) de l'élément de palier (3).

7. Coussinet de palier selon l'une quelconque des revendications 1 à 6, **caractérisé en ce que** les bossages (5) s'étendent respectivement sur 4 % à 10 % de la circonférence de l'élément de palier (3).

8. Coussinet de palier selon l'une quelconque des revendications 1 à 7, **caractérisé en ce que** les bossages (5) sont réalisés sous forme de nervures.

9. Coussinet de palier selon l'une quelconque des revendications 1 à 8, **caractérisé en ce que** le diamètre intérieur (6) du coussinet de palier (3) augmente ou diminue de jusqu'à 0,2 % en partant d'un diamètre intérieur moyen (6'), vu sur la circonférence.

10. Coussinet de palier selon l'une quelconque des revendications 1 à 9, **caractérisé en ce que** l'élément de palier (3) est réalisé en matière plastique.
